# EUROPEAN PATENT SPECIFICATION

(11) **EP 2 539 642 B1**
(45) Date of publication and mention of the grant of the patent: **16.11.2016**
(21) Application number: 11715777.6
(22) Date of filing: 23.02.2011
(51) Int. Cl.: F24F 11/00, F24F 12/00, F24F 13/18, E06B 7/10

(54) **VENTILATION DEVICE**
VENTILATIONSVORRICHTUNG
DISPOSITIF DE VENTILATION

(30) Priority: 23.02.2010 SI 201000068
(43) Date of publication of application: 02.01.2013
(73) Proprietor: Mik, D.o.o., 3212 Vojnik (SI)
(72) Inventor: NOVAK, Peter, 1000 Ljubljana (SI)
(74) Representative: Macek, Gregor
(86) International application number: PCT/SI2011/000011
(87) International publication number: WO 2011/105969

(56) References cited:
- EP-A1- 1 479 982
- EP-A2- 1 486 637
- WO-A1-00/46555
- WO-A1-01/84057
- WO-A1-97/35152
- WO-A1-03/091632
- WO-A1-2009/128150
- DE-A1- 19 855 056

## Description

The invention falls within the scope of building construction, namely within the special measures for providing ventilation in the window area. On the other hand, the invention can be placed within the scope of mechanical engineering, where it belongs to details in connection to the ventilation during the use of the heat exchanger.

The invention is based on the problem of designing a ventilation device that will be sufficiently efficient for actual needs, and will on the one hand allow being minimized to the extent where during the first installation or the replacement of windows in the event of renovation of buildings, it can be installed either into the window frame or optionally mounted into the building wall directly near this frame, and will on the other hand efficiently contribute to the substantial improvement of the energy balance of the respectively ventilated building.

AT 376 276 proposes a multiple glazed window with a heat exchanger, which is intended to be equipped with the supply and outflow air ducts. Furthermore, the heat exchanger enables the transfer of heat from the outflow air to the supply air flow that runs through the particle removal filter, if required, is envisaged. The inlet of supply air and the outlet of outflow air are performed by means of separate devices for forced circulation, especially fans; all of them powered by the relevant motor, in particular the electric motor. Moreover, both the inlet of supply air and the outlet of outflow air are equipped with a damping means, *e.g.* a grid, for air flow regulation.

One of the versions features a heat exchanger together with the corresponding ducts of supply and outflow air with installed fans and other elements, which is installed into the window frame. As the heat exchanger is constructed of either plates or pipes with the air flow in between, it is of relatively large dimensions. Consequently, due to large dimensions of the complete device, a significantly bigger opening for the installation of windows than with the regular windows must be provided, which results in either reducing the light transmitting surfaces after the installation or, at the very most, meeting these requirements already during the design of each building. Due to the abovementioned reasons, the option of subsequent installation of these windows is therefore hardly available.

This device is intended to be fitted into the wall next to the window or into the parapet area under the window, where due to the usually smaller depth available, the width and height of the device are accordingly larger. In order to avoid the abovementioned problems with large dimensions of the ventilation device, one of the AT 376 276 versions proposes the option of leading the flow of supply air through the profiles around the perimeter of the widow casement and the flow of outflow air through the profiles around the perimeter of the window frame if the window frame and the window casement are composed of hollow metal or plastic profiles, thus transferring the heat from the outflow air in the window frame to the flow of supply air in the window casement. As both the window casement and the window frame are on the hand exposed to the temperature of building interior and on other hand also to the temperature and all other effects in the building surroundings, while only a single surface for the transfer of heat from the flow of outflow air to the flow of supply air is positioned between them, the efficiency of the recovery that is designed in such a manner is highly questionable. Moreover, in such event, the use of relatively strong fans must be taken into account, ensuring the circulation of air through the profiles along the entire perimeter of the window casement or window frame, which relates to the specified energy consumption and other effects, e.g. noise. Furthermore, with such window design it is practically impossible to ensure the opening of the window for classic or natural ventilation purposes during the period of favourable climatic condition.

A ventilation device according to the preamble of claim 1 is known from document EP 1 486 637 A2.

This invention applies to the ventilation device according to claim 1.

One of the possible versions of the invention includes a fan, powered by the electric motor that is charge by the battery and controlled by the control unit. The fan is installed into the primary air duct, which runs between the outer inlet through the primary part of the heat exchanger and the inner inlet.

The alternative version of the device according to the invention includes the fan, powered by the electric motor that is charged by the battery and controlled by the control unit where the fan is installed into the secondary air duct, which runs between the inner outlet through the secondary part of the heat exchanger and the outer outlet.

A combined version with two fans is also possible, where the first fan, powered by the electric motor that is charged by the battery and controlled by the control unit, is installed into the primary air duct that runs between the outer inlet through the primary part of the heat exchanger and the inner inlet, while the other fan, powered by the corresponding electric motor that is also charged by the battery and controlled by the control unit, is installed into the secondary air duct that runs between the inner outlet through the secondary part of the heat exchanger and the outer outlet.

Furthermore, the abovementioned air inlets and outlets are primarily equipped with grids, where at least the outer openings, *ie.* the openings on the outer surface of the device outside the ventilated room, are equipped with the protective screen against insects. The invention also proposes that at least the outer outlet is equipped with an overpressure damper for preventing the intrusion of air in the event of external overpressure.

Moreover, according to the invention, it is provided that the primary air duct, which runs between the outer inlet through the primary part of the heat exchanger and the inner inlet, contains a filter for coarse particles, while an optional filter for coarse particles can also be provided in the secondary air duct, which runs between the inner outlet through the secondary part of the heat exchanger and the outer outlet. According to the invention, it is of special importance whether the primary air duct, which runs between the outer inlet through the primary part of the heat exchanger and the inner inlet, includes a fine filter for retaining fine particles, especially pollen, depending on the direction of the air flow behind the coarse particle filter.

Moreover, according to the invention, it is provided that the device housing can either be mounted in a detachable manner on the outer profile perimeter of the regular window frame and can be together with the latter installed into the respectively available opening in the building, intended for the installation of the window, or alternatively, that the housing represents an integral part of the respectively available window frame.

Hereinafter, the invention will be explained in detail with version samples, illustrated in the attached figures that show:

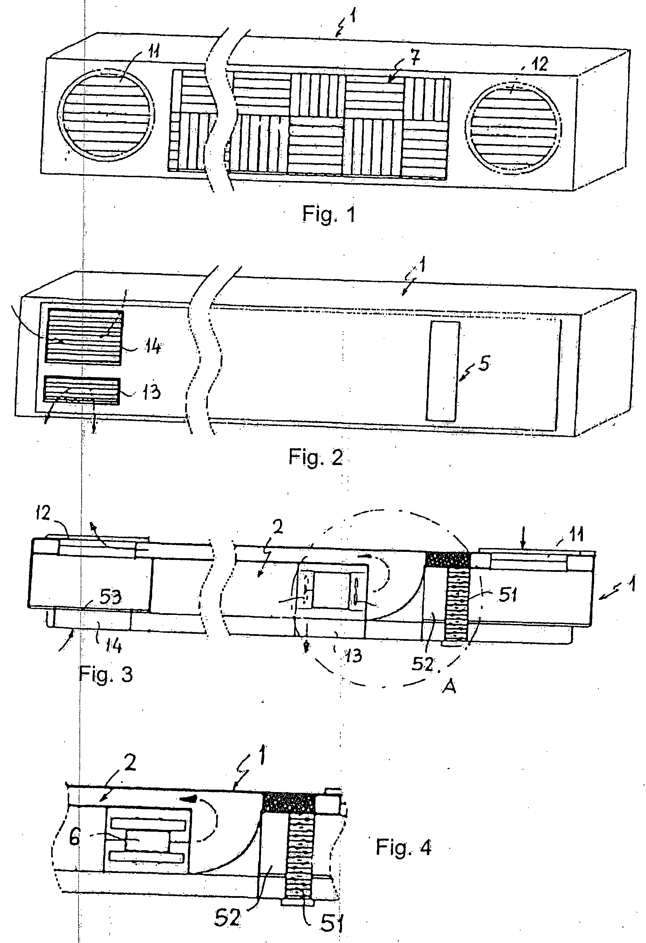

- Fig. 1: the ventilation device in perspective view during the use and from the outside;
- Fig. 2: the ventilation device in perspective view during the use and from the inside;
- Fig. 3: the schematic illustration of the device in longitudinal section according to Fig. 1 and 2;
- Fig. 4: detail A according to Fig. 3 viewed from the opposite direction;

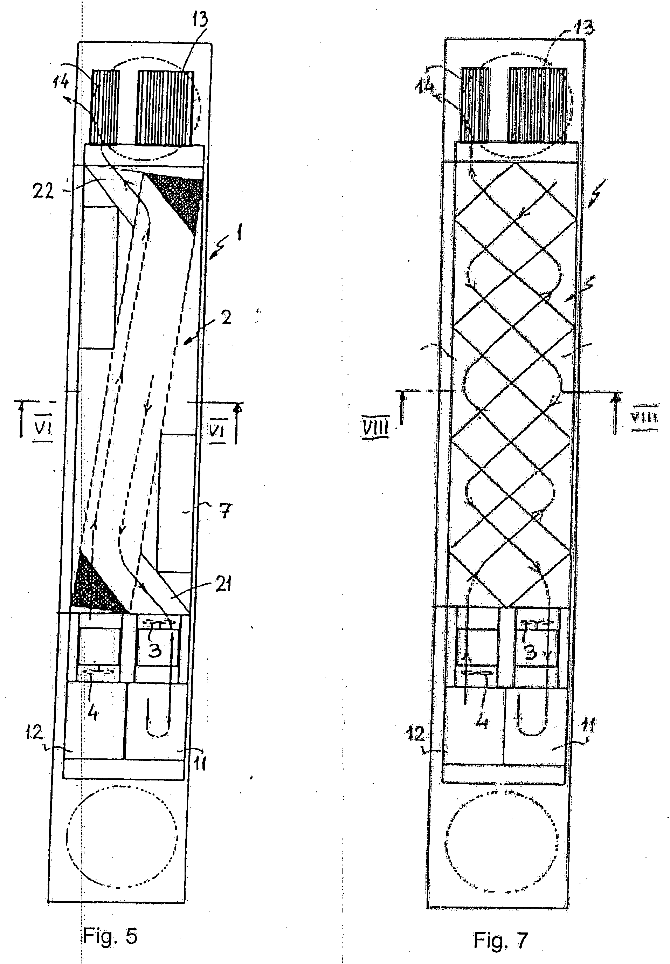

- Fig. 5: version of the device, again shown schematically and in longitudinal section;
- Fig. 6: the device shown in cross-section in the VI - VI plane according to Fig. 5;
- Fig. 7: further version of the device, again shown schematically and in longitudinal section;
- Fig. 8: the device shown in cross-section in the VIII - VIII place according to Fig. 7;

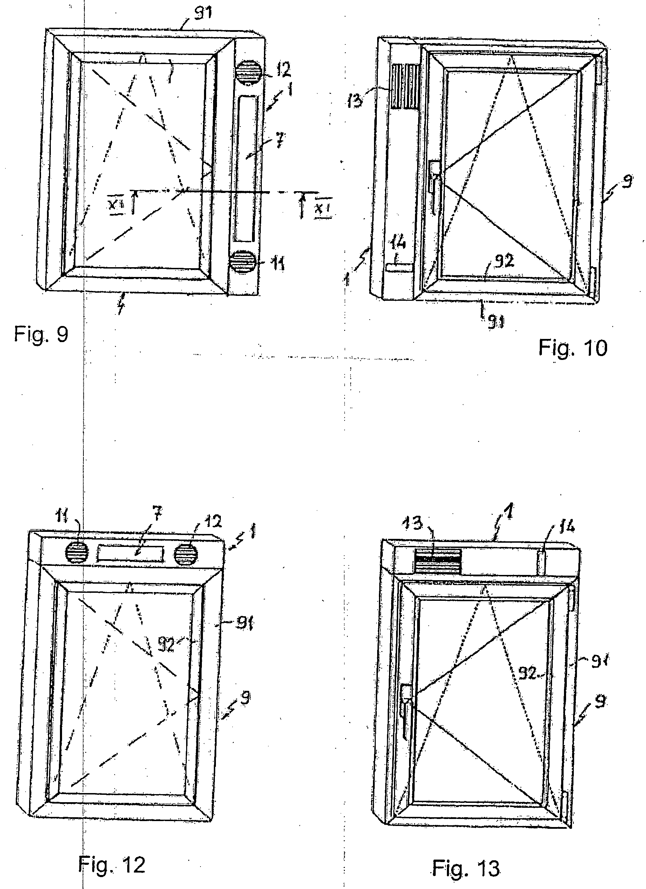

- Fig. 9: one of the possible manners of installation of the device, viewed from the outside;
- Fig. 10: the device according to Fig. 9, viewed from the inside;
- Fig. 11: the device shown in cross-section in the XI - XI plane according to Fig.9:
- Fig. 12: another possible manner of installation of the device, viewed from the outside;
- Fig. 13: the device according to Fig. 12, viewed from the inside.

According to the invention, provision is made for a device for the ventilation of buildings, which comprises the housing 1, representing either the integral part of the window frame 91 or can be optionally installed in a detachable manner directly next to the window frame 92 of the respectively window 9. The housing in the latter example may be equipped with click-in pin 16 that can be inserted into regular grooves 910 on the frame 91 perimeter of the window 9.

The abovementioned housing 1 is equipped with openings 11, 12, 13, 14, namely on the outer surface with the inlet opening 11 and air outlet opening 12, and on the inner surface with the opening 13 for the supply of air into the room and the opening 14 for the discharge of air from the room. Each of these openings 11, 12, 13, 14 is in principle covered by a grid of any shape, for example round, square, rectangular, polygonal. In addition, each of the outer openings 11, 12 is primarily equipped with a screen for preventing the entry of insects, not shown in the drawing, as well as a relevant grid for preventing the entry of precipitation. At least the grid of inner inlet opening 13 for the supply of air from the device into the respectively ventilated room is designed in to allow the change of direction and speed of injected air.

Furthermore, the abovementioned housing 1 includes a thermally insulated cover 15 with the attached single heat exchanger 2, primarily a pair of fans 3, 4 with corresponding electric motors 30, 40, and also a filter unit 5, a battery 6, as well as at least one solar cell 7 and a relevant control unit 8 for controlling the operation of respectively available fans 3, 4.

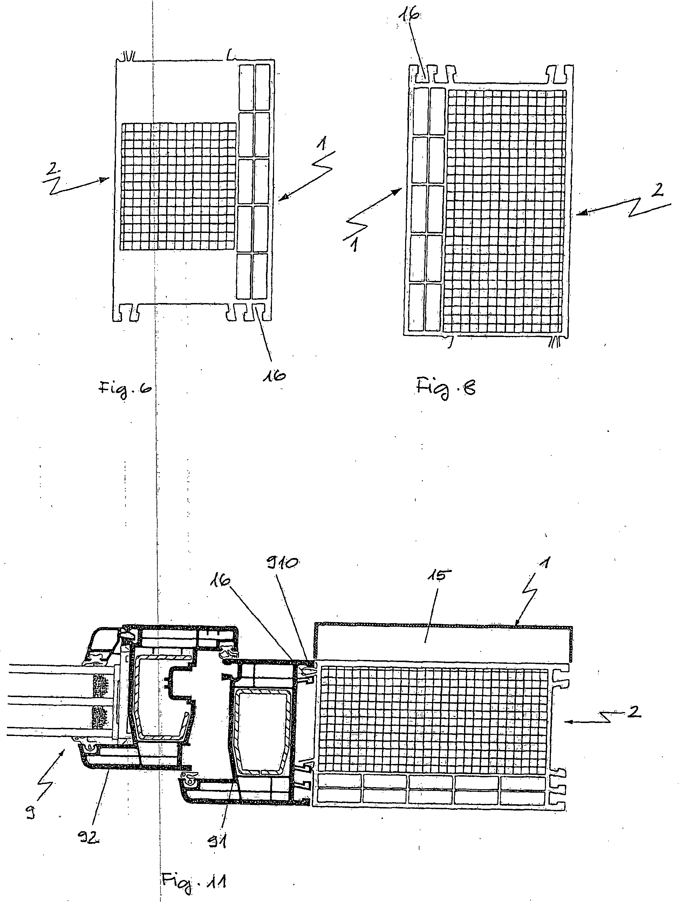

The heat exchanger 2 is of the counter-flow type and is according to the invention designed as honeycomb heat exchanger with thin walls, composed of thermoplastic material on the basis of polymers, with a set of through passages, each passage is designed as a set of channels which extend along the whole length of the heat exchanger. The heat exchanger 2 itself is therefore forming the primary part 21, which runs between the outer inlet opening 11 and the inner inlet opening 13 thus forming the primary air duct, as well as the secondary part 22, which runs between the inner outlet opening 14 and the outer outlet opening 12 thus forming the secondary air duct. One part of set of passages is forseen for inner air flow - primary part 21 and the respective adjacent part of set of passages is forseen for outer air flow - secondary part 22. The passages for inner and outer air flow are alternating through the entire cross-section of the heat exchanger, as seen on Fig. 6, 8 and 11. The flow of the two media is parallel and countercurrent.

Fans 3, 4 can be either axial or radial, each driven by a separate electric motor 30, 40, powered from the battery 6, which is charged by solar cells 7, placed on the outer surface of the housing 1, and, if required, also by the respectively available standard electric power supply. The control of the electric motors 30, 40 of these fans 3, 4 is performed by the control unit 9, which is designed as a microprocessor control of the ventilation system on the basis of the relevant operation software and two sensors for detecting the ambient temperature and the temperature of the air entering the respectively ventilated room, not shown in the drawing, and the timer and on/off switch, also not shown in the drawing, Optionally, the control includes also the indicator of operation and/or air temperature, a check of the filter dirtiness and the remote receiver for controlling.

The filter unit 5 in the version in question includes a coarse filter 51 and a fine filter 52 for filtering the supplied air and a coarse filter 53 for filtering the discharged air.

The device designed in such a manner is intended for the ventilation of rooms with minimum heat loss. The installed counter-flow heat exchanger 2 takes away the heat in the air that is being discharged from the room and transfers it to the ambient air that is being supplied into the room. In order to ensure the circulation of air in the displayed example, two fans 3, 4 are proposed, each driven by a separate electric motor 30, 40, electrically powered by the battery 6 that is charged by the solar cell 7, installed on the outer surface of the housing 1 or, if required, by the other electric power supply respectively available. The ambient air enters through the opening 11 for the ambient air, which includes grids that prevent the entry of precipitation into the device and a fine screen behind the grids for preventing the entry of insects. When the ambient air reaches the coarse filter 51, coarse particles are removed, while in the following fine filter 52 fine particles in the size of pollen are removed from the air as well. The air then flows through the inlet fan which pushes the air through the primary side 21 of the heat exchanger 2, i*e*. the heat recuperator, where the air is warmed in the winter and cooled in the summer, if the ambient temperature is lower, after which the heated air enters the room through the inner inlet opening 13 at the temperature that at least approximately corresponds with the ambient temperature. This inner inlet opening 13 includes grids and is designed to allow the setting of the direction and speed of injected air.

The air exits the room and enters the device through the inner outlet suction grid 14 with low speed, while prior entering the secondary part 22 of the heat exchanger 2 it is cleaned in the coarse filter 53. The fan 4 sucks this exiting air through the heat exchanger 2, which represent the heat recuperator, and then pushes it along the relevant turning channel on the outer surface of the housing 1 through the outer outlet opening 12 into the open air, ie. the surroundings of the device. The outer outlet opening 12 includes overpressure dampers 121 and is positioned on the opposite side of the device, therefore, the mixing of discharge and outside air is prevented.

Electric motors 30,40 that propel both highly efficient fans 3,4 are powered by electricity, generated by solar cells 7, which is stored in the battery 6. In the event of longer absence of solar radiation or defect of solar cells 7, the battery 6 can also be charged from the standard electric power supply. In order to use the solar radiation as high as possible, the device can according to the invention include all types of solar cells, including the thin-layer solar cells, which perform well even with diffused light.

If required, filters 51, 52, 53 are changed in the device through special slots, accessible from the room. When the fans 51, 52, 53 need to be replaced, for example if they are dirty, the optional indicator light, which may be available for this purpose, is activated.

The device is controlled either manually or by a remote control. The control unit 8, which is installed into the device, enables the measurement of outside air temperature and temperature of air injected into the room. For protection against cooling, if the temperature of injected air falls below a set value, the device is switched off automatically. During the normal operation of the device, the control unit 8 according to the invention enables a simultaneous operation of both fans 3, 4. The additional version allows selection between the operation of only one fan 3 or 4, thus enabling overpressure or vacuum ventilation. This reduces and balances the air volume in very tight rooms. The remote control of the device operation can be performed by the remote control device, not shown in the drawing, designed in a similar manner than remote controls, designed for controlling air-conditioning machines or household appliances or radios and televisions.

## Claims

1. Ventilation device, comprising the housing (1) whereby the housing (1) represents an integral part of the respectively available window frame (91) with the installed heat exchanger (2), which is connected to at least one opening (11, 12) on the outer surface of the housing (1) and at least one opening (13, 14) positioned on the inner surface of the housing (1), provided that the air flow through the heat exchanger is enabled, as well as with at least one electric motor (30, 40) powered fan (3, 4) for sucking or pushing the air through the heat exchanger (2) between the mentioned openings (11, 12 or 13, 14), and, moreover, also at least one filter (51, 52, 53) for cleaning the flowing air between these openings (11, 12; 13, 14) and the control unit (8) for controlling the motor (30, 40) of respectively available fan (3, 4) depending on the temperature of ambient air and the temperature of air in the area of inner inlet (13), the outer surface of the housing (1) is intended to be equipped with at least one solar cell (7), designed for the charging of the battery (6) in combination with the standard electric power supply, if required, whereby on the thermally insulated cover (15) of the housing (1) the single heat exchanger (2) is attached, which is designed as a honeycomb heat exchanger with thin walls, consisting of a thermoplastic material on the basis of polymers, and includes a set of through passages, and heat exchanger (2) itself is forming the primary part (21), connected to the outer inlet (11) for the supply of air into the housing (1) and the inner inlet (13) for the supply of air from the device into the respectively ventilated room, as well as the secondary part (22), connected to the inner outlet (14) for the discharge of air from the room into the device and the outer outlet (12) for the discharge of air from the device into the surroundings of respectively ventilated building, **characterized in that** each passage is designed as a set of channels which extend along the whole length of the heat exchanger whereby one part of said channels is forseen for inner air flow thus forming primary part (21) and the respective adjacent part of said channels is forseen for outer air flow thus forming secondary part (22) whereby the channels for inner and outer air flow are alternating through the entire cross-section of the heat exchanger (2) and said flows are parallel and countercurrent and the inner outlet (14) for the discharge of air from the room into the device and the inner inlet (13) for the supply of the air from the device into the room are positioned one above the other on the inner side of the housing (1) and the air which exits the room is pushed through the heat exchanger (2) and along a turning channel on the outer surface of the housing (1) through the outer outlet opening (12).

2. Device according to claim 1, **characterised in that** the fan (3), driven by the electric motor (30) that is charged by the battery (6) and controlled by the control unit (8), is installed in the primary air duct, running between the outer inlet (11) through the primary part (21) of the heat exchanger (2) and the inner inlet (13).

3. Device according to claim 1, **characterised in that** the fan (4), driven by the electric motor (40) that is charged by the battery (6) and controlled by the regulation unit (8), is installed into the secondary air duct, running between the inner outlet (14) through the secondary part (22) of the heat exchanger (2) and the outer outlet (13).

4. Device according to claim 1, **characterised in that** it comprises two fans (3, 4), where the fan (3), driven by the electric motor (30) that is charged by the battery (6) and controlled by the control unit (8), is installed in the primary air duct, which runs between the outer inlet (11) through the primary part (21) of the heat exchanger (2) and the inner inlet (13), and the fan (4), driven by the electric motor (40) that is charged by the battery (6) and controlled by the control unit (8) is installed in the secondary air duct, which runs between the inner outlet (14) through the secondary part (22) of the heat exchanger (2) and the outer outlet (13).

5. Device according to any of claims I to 4, **characterised in that** at least the outer outlet (12) is equipped with the overpressure damper (121) for preventing the entry of air in the event of outside overpressure.

6. Device according to any of claims 1 to 5, **characterised in that** the secondary air duct, which runs between the inner outlet (14) through the secondary part (22) of the heat exchanger (2) and the outer outlet (13) includes a filter (52) for fine particles.

7. Device according to any of claims 1 to 6, **characterised in that** the primary air duct, which runs between the outer inlet (11) through the primary part (21) of the heat exchanger (2) and the inner inlet (13), depending on the direction of the air flow behind the filter (51) for coarse particles, contains also a fine filter (52) for retaining fine particles, especially pollen.

## Patentansprüche

1. Ventilationsvorrichtung umfassend ein Gehäuse (1), wobei das Gehäuse (1) ein integrales Teil des jeweiligen Fensterrahmens (91) mit einem eingebauten Wärmeaustauscher (2) ist, wobei der Wärmeaustauscher mit zumindest einer Öffnung (11, 12) an der Außenfläche des Gehäuses (1) und mit mindestens einer auf der Innenfläche des Gehäuses (1) angebrachten Öffnung (13, 14) verbunden ist, vorausgesetzt, dass der Luftstrom durch den Wärmeaustauscher ermöglicht wird, sowie einen durch wenigstens einem Elektromotor (30, 40) angetriebenen Ventilator (3, 4) zum Ansaugen oder Durchpressen der Luft durch den Wärmeaustauscher (2) zwischen den genannten Öffnungen (11, 12 oder 13, 14), und, des Weiteren, auch mindestens einen Filter (51, 52, 53) zur Reinigung der zwischen diesen Öffnungen strömenden Luft (11, 12; 13, 14) und eine Steuereinheit (8) zur Steuerung des Motors (30, 40) des jeweiligen Ventilators (3, 4) in Abhängigkeit der Raumlufttemperatur und der Lufttemperatur im Bereich des Inneneinlasses (13), wobei die Außenfläche des Gehäuses (1) derart ausgeführt ist, dass sie mit mindestens einer Solarzelle (7) ausgestattet werden kann, die zur Versorgung der Batterie (6) in Kombination mit der Standardstromversorgung, falls nötig, ausgelegt ist, wobei ein Wärmeaustauscher (2), der als Wabenwärmeaustauscher mit dünnen Wänden ausgeführt ist, am thermisch isolierten Deckel (15) des Gehäuses (1) befestigt ist, wobei der Wärmeaustauscher aus thermoplastischem Material auf Polymerbasis besteht und einen Satz von Durchtrittskanälen umfasst, und der Wärmeaustauscher (2) einen Primärteil (21) bildet, der mit dem Außeneinlass (11) zur Luftzufuhr in das Gehäuse dient (1) und dem Inneneinlass (13) der zur Luftzufuhr aus der Vorrichtung in den jeweiligen belüfteten Raum verbunden ist, sowie einen Sekundärteil (22), der mit dem Innenauslass (14) für den Luftabfuhr aus dem Raum in die Vorrichtung und mit dem Außenauslass (12) für den Luftabfuhr aus der Vorrichtung in die Umgebung des jeweiligen belüfteten Gebäudes verbunden ist, **dadurch gekennzeichnet, dass** jeder Durchtrittskanal als ein Satz aus sich längs über die ganze Länge des Wärmeaustauschers erstreckenden Kanälen ausgebildet ist, wobei ein Teil der genannten Kanäle für den inneren Luftstrom vorgesehen ist und den Primärteil (21) bildet und der jeweilige benachbarte Teil der genannten Kanäle für den äußeren Luftstrom vorgesehen ist und den Sekundärteil (22) bildet, wobei die Kanäle für den inneren und äußeren Luftstrom alternierend über den ganzen Querschnitt des Wärmeaustauschers (2) angebracht sind und die Ströme parallel und in Gegenrichtung verlaufen und der Innenauslass (14) für den Luftabfuhr aus dem Raum in die Vorrichtung und der Inneneinlass (13) für den Luftzufuhr aus der Vorrichtung in den Raum sind übereinander an der inneren Seite des Gehäuses (1) angeordnet, und die aus dem Raum austretende Luft wird durch den Wärmeaustauscher (2) sowie durch den Wendekanal an der äußeren Fläche des Gehäuses (1) durch die äußere Auslassöffnung (12) gedrückt.

2. Vorrichtung nach Anspruch 1, **dadurch gekennzeichnet, dass** der Ventilator (3), der durch den Elektromotor (30), der durch eine Batterie (6) gespeist und durch die Steuereinheit (8) gesteuert wird, im Primärluftkanal angeordnet ist, der zwischen dem Außeneinlass (11) durch den Primärteil (21) des Wärmeaustauschers (2) und dem Inneneinlass (13) verläuft.

3. Vorrichtung nach Anspruch 1, **dadurch gekennzeichnet, dass** der Ventilator (4), der durch den Elektromotor (40), der durch eine Batterie (6) gespeist und durch die Steuereinheit (8) gesteuert wird, im Sekundärluftkanal angeordnet ist, der zwischen dem Innenauslass (14) durch den Sekundärteil (22) des Wärmeaustauschers (2) und dem Außenauslass (13) verläuft.

4. Vorrichtung nach Anspruch 1, **dadurch gekennzeichnet, dass** sie zwei Ventilatoren (3, 4) umfasst, wo der Ventilator (3), der durch den Elektromotor (30), der durch eine Batterie (6) gespeist und durch die Steuereinheit (8) gesteuert wird, im Primärluftkanal angeordnet ist, der zwischen dem Außeneinlass (11) durch den Primärteil (21) des Wärmeaustauschers (2) und dem Inneneinlass (13) verläuft, und der Ventilator (4), der durch den Elektromotor (40), der durch eine Batterie (6) gespeist und durch die Steuereinheit (8) gesteuert wird, im Sekundärluftkanal angeordnet ist, der zwischen dem Innenauslass (14) durch den Sekundärteil (22) des Wärmeaustauschers (2) und dem Außenauslass (13) verläuft.

5. Vorrichtung nach einem der Ansprüche 1 bis 4, **dadurch gekennzeichnet, dass** mindestens ein Außenauslass (12) mit einem Überdruckdämpfer (121), der den Lufteintritt im Falle eines Außenüberdrucks verhindert, ausgestattet ist.

6. Vorrichtung nach einem der Ansprüche 1 bis 5, **dadurch gekennzeichnet, dass** der Sekundärluftkanal, der sich zwischen dem Innenauslass (14) durch den Sekundärteil (22) des Wärmeaustauschers (2) und dem Außenauslass (13) erstreckt, einen Feinpartikelfilter (52) enthält.

7. Vorrichtung nach einem der Ansprüche 1 bis 6, **dadurch gekennzeichnet, dass** der Primärluftkanal, der sich zwischen dem Außeneinlass (11) durch den Primärteil (21) des Wärmeaustauschers (2) und dem Inneneinlass (13) erstreckt, je nach der Richtung des Luftstroms hinter dem Grobpartikelfilter (51), einen Feinstaubfilter (52), vor allem für Pollen, enthält.

## Revendications

1. Dispositif de ventilation comprenant un logement (1), le logement (1) représentant une partie intégrale du cadre de fenêtre respectivement disponible (91) avec l'échangeur de chaleur (2) installé qui est raccordé à au moins une ouverture (11, 12) sur la surface externe du logement (1) et au moins une ouverture (13, 14) positionnée sur la surface intérieure du logement (1), à condition que le flux d'air à travers l'échangeur de chaleur soit activé, ainsi qu'un ventilateur (3, 4) entraîné au moins par un moteur électrique (30, 40) pour aspirer ou pousser l'air à travers l'échangeur de chaleur (2) entre lesdites ouvertures (11, 12 ou 13, 14), et, en plus, aussi au moins un filtre (51, 52, 53) pour nettoyer l'air circulant entre ces ouvertures (11, 12; 13, 14) et l'unité de commande (8) pour commander le moteur (30, 40) du ventilateur respectivement disponible (3, 4) en fonction de la température de l'air ambiant et la température de l'air dans la zone de l'admission interne (13), la surface externe du logement (1) est prévue pour être équipée d'au moins une cellule solaire (7) conçue pour charger la batterie (6) en combinaison avec l'alimentation électrique ordinaire, si nécessaire, l'échangeur de chaleur unique (2) étant attaché sur le couvercle (15) dotée d'une isolation thermique du logement (1), ledit échangeur de chaleur étant conçu comme un échangeur de chaleur en nid d'abeilles à parois minces, constituées d'un matériau thermoplastique à base de polymères, et comprenant un ensemble de passages traversants, et l'échangeur de chaleur (2) lui-même formant la partie primaire (21) reliée à l'admission externe (11) pour l'alimentation en air dans le logement (1) et l'admission interne (13) pour l'alimentation en air depuis le dispositif dans la salle respectivement ventilée, et la partie secondaire (22), reliée à la sortie interne (14) ménagée pour l'évacuation de l'air depuis la salle dans le dispositif et la sortie externe (12) pour l'évacuation de l'air depuis le dispositif dans l'environnement du bâtiment respectivement ventilé, **caractérisé en ce que** chaque passage est conçu comme un ensemble de canaux qui s'étendent sur toute la longueur de l'échangeur de chaleur, une partie desdits canaux étant prévue pour un flux d'air interne formant ainsi la partie primaire (21) et la partie adjacente respective de ces canaux est prévue pour le flux d'air externe formant ainsi la partie secondaire (22), les canaux de circulation d'air intérieur et extérieur étant alternés à travers toute la section transversale de l'échangeur de chaleur (2) et lesdits flux étant parallèles et à contre-courant, et la sortie interne (14) pour l'évacuation d'air de la salle dans le dispositif et l'admission interne (13) pour l'alimentation en air du dispositif dans la salle sont positionnées l'une au-dessus de l'autre sur le côté interne du logement (1) et l'air qui sort de la chambre est poussé à travers l'échangeur de chaleur (2) et le long d'un canal rotatif sur la surface externe du logement (1) à travers l'ouverture de la sortie externe (12).

2. Dispositif selon la revendication 1, **caractérisé en ce que** le ventilateur (3), entraîné par le moteur électrique (30) qui est chargé par la batterie (6) et commandé par l'unité de commande (8), est installé dans le conduit d'air primaire passant entre l'admission externe (11) à travers la partie primaire (21) de l'échangeur de chaleur (2) et l'admission interne (13).

3. Dispositif selon la revendication 1, **caractérisé en ce que** le ventilateur (4), entraîné par le moteur électrique (40) qui est chargé par la batterie (6) et commandé par l'unité de régulation (8), est installé dans le conduit d'air secondaire passant entre la sortie interne (14) à travers la partie secondaire (22) de l'échangeur de chaleur (2) et la sortie externe (13).

4. Dispositif selon la revendication 1, **caractérisé en ce qu'il** comprend deux ventilateurs (3, 4), où le ventilateur (3) entraîné par le moteur électrique (30) qui est chargé par la batterie (6) et commandé par l'unité de commande (8), est installé dans le conduit d'air primaire qui passe entre l'admission externe (11) à travers la partie primaire (21) de l'échangeur de chaleur (2) et l'admission interne (13), et le ventilateur (4) entraîné par le moteur électrique (40) qui est chargé par la batterie (6) et commandé par l'unité de commande (8) est installé dans le conduit d'air secondaire, qui passe entre la sortie interne (14) à travers la partie secondaire (22) de l'échangeur de chaleur et la sortie externe (13).

5. Le dispositif selon l'une quelconque des revendications 1 à 4, **caractérisé en ce qu'au** moins la sortie externe (12) est équipée d'atténuateur de surpression (121) pour empêcher l'admission d'air en cas de surpression extérieure.

6. Le dispositif selon l'une quelconque des revendications 1 à 5, **caractérisé en ce que** le conduit d'air secondaire, qui passe entre la sortie interne (14) à travers la partie secondaire (22) de l'échangeur de chaleur et la sortie externe (13) comprend un filtre (52) à particules fines.

7. Le dispositif selon l'une quelconque des revendications 1 à 6, **caractérisé en ce que** le conduit d'air primaire, qui passe entre l'admission externe (11) à travers la partie primaire (21) de l'échangeur de chaleur (2) et l'admission interne (13), selon le sens d'écoulement de l'air derrière le filtre (51) à grosses particules, contient également un filtre fin (52) pour retenir les particules fines, notamment le pollen.
